# EUROPEAN PATENT APPLICATION

(11) **EP 2 366 677 A1**
(43) Date of publication of application: **21.09.2011**
(21) Application number: 10192200.3
(22) Date of filing: 23.11.2010
(51) Int. Cl.: C04B 38/00, B01D 46/24

(54) **Honeycomb structured body**

(30) Priority: 19.03.2010 WO PCT/JP2010/054806
(71) Applicant: IBIDEN CO., LTD., Ogaki-shi Gifu 503-8604 (JP)
(72) Inventor: Yamada, Takehisa, Gifu 501-0695 (JP); Naruse, Kazuya, Gifu 501-0695 (JP)
(74) Representative: HOFFMANN EITLE

(57) **Abstract**

The honeycomb structured body of the present invention comprises a honeycomb block formed by bonding a plurality of honeycomb fired bodies together with an adhesive layer interposed between the plurality of honeycomb fired bodies, each of the honeycomb fired bodies having a large number of cells that are longitudinally arranged in parallel with each other with a cell wall therebetween, wherein at least one of the honeycomb fired bodies has a first cell region having a plurality of first cells formed therein and a second cell region having a plurality of second cells formed therein and existing, in such a manner as to surround a part or the whole of the first cell region, between a first peripheral cell wall located on the periphery of the first cell region and a second peripheral cell wall located on the periphery of each honeycomb fired body, at least a part of the second peripheral cell wall defining the second cell region is in contact with the adhesive layer, the first cells and second cells are plugged at alternate ends, the honeycomb structured body has a higher aperture ratio at a first end face than at a second end face, and the first end face has a higher aperture ratio in the second cell region than in the first cell region.

## Description

### TECHNICAL FIELD

The present invention relates to a honeycomb structured body.

### BACKGROUND ART

It has been a problem recently that particulates (hereinafter also referred to as PMs) such as soot and other harmful substances contained in the exhaust gases discharged from internal combustion engines of vehicles such as buses and trucks, construction machines, and the like cause damage to environment and human bodies. To overcome such a problem, various honeycomb structured bodies containing porous ceramics have been proposed as honeycomb filters configured to capture PMs in exhaust gases to purify exhaust gases.

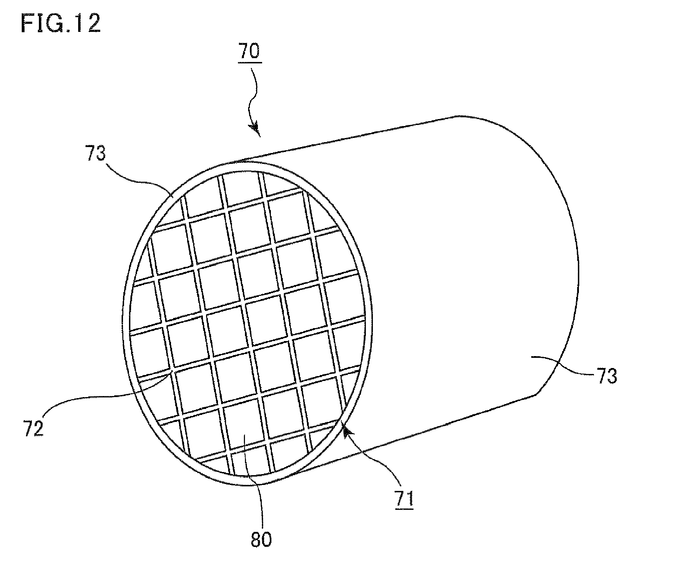

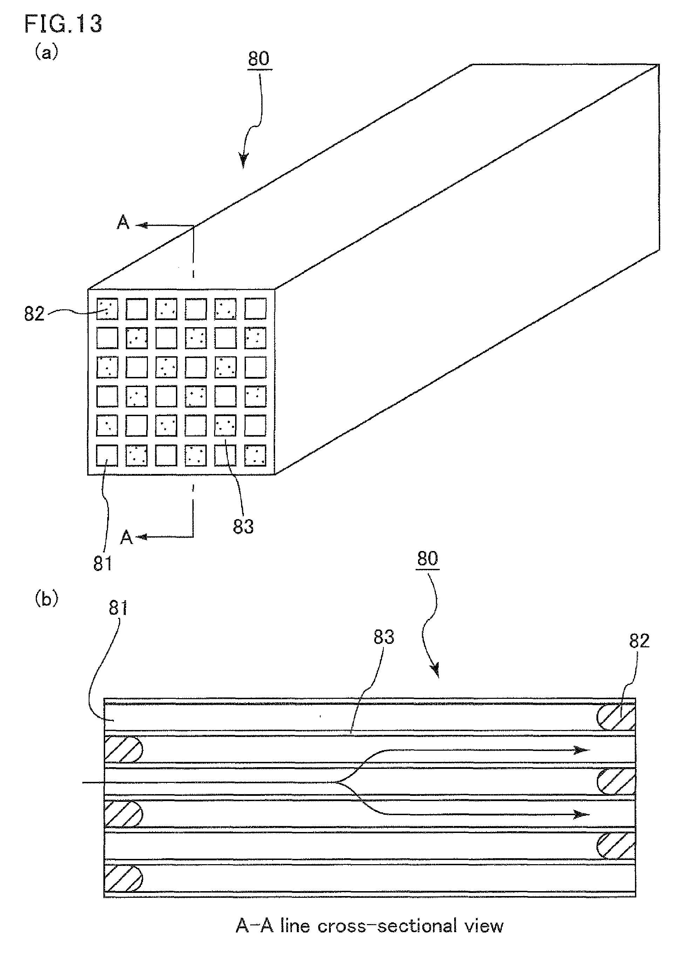

Fig. 12 is a perspective view schematically illustrating an example (see Patent Document 1) of a conventional honeycomb structured body. Fig. 13(a) is a perspective view schematically illustrating a honeycomb fired body constituting the above conventional honeycomb structured body, and Fig. 13 (b) is a cross-sectional view taken along the A-A line in Fig. 13(a). A conventional honeycomb structured body 70 illustrated in Fig. 12 has a honeycomb block 71 produced by bonding, by interposing adhesive layers 72, a plurality of honeycomb fired bodies 80 made of materials such as silicon carbide, and has a coat layer 73 formed around the honeycomb block 71 (hereinafter, a honeycomb structured body including a plurality of honeycomb fired bodies is also referred to as an aggregated honeycomb structured body).

As illustrated in Fig. 13(a) and Fig. 13(b), each honeycomb fired body 80 has a plurality of cells 81 plugged with a plug 82 at either one of the ends on the exhaust gas inlet side and outlet side so that exhaust gases, having flowed into one of the cells 81, always pass through a cell wall 83 separating the cells 81 before flowing out of another cell 81. In other words, each cell wall 83 separating the cells 81 functions as a filter that captures PMs in exhaust gases.

When the cell walls continue to function as filters and the amount of captured PMs reaches a certain amount, the honeycomb structured body needs to go through a regeneration process so that the captured PMs are removed by burning. The regeneration process, however, requires a large amount of energy for burning PMs. Accordingly, in order to lengthen the interval of the regeneration processes and improve the operation efficiency of internal combustion engines, honeycomb structured bodies are desired to capture a large amount of PMs. If, however, the amount of captured PMs is very large when the regeneration process is performed, the amount of heat resulting from PM combustion may be very large and the thermal stress or the thermal shock may easily cause cracks. In consideration of such a situation, the limit amount of capturing is set to the value that allows capturing of PMs to the maximum amount and still prevents generation of cracks.

As a measure for increasing the limit amount of capturing, Patent Document 2 teaches an aggregated honeycomb structured body in which the limit amount of PM capturing is increased by increasing the aperture ratio of cells on the exhaust gas inlet side.

Patent Document 1: JP-A 2006-255574
Patent Document 2: WO 2004/024293 A1

### DISCLOSURE OF THE INVENTION

### PROBLEMS TO BE SOLVED BY THE INVENTION

Other measures for increasing the limit amount of capturing include a measure to prevent sudden generation of thermal stress in PM combustion by increasing the weight of the honeycomb structured body to increase the thermal capacity of the honeycomb structured body. However, such a measure tends to cause the following problems: (1) if cell density is increased to increase the area of cell walls, manufacture of a honeycomb structured body may be difficult; (2) if cell walls are thickened to increase the weight of the honeycomb structured body, the pressure loss value, which is another characteristic required for a filter, may be large; and (3) if the weight of a honeycomb structured body is increased, it may be difficult to decrease the weight of the whole vehicle and the equipment for installing the honeycomb structured body may be forced to have a high specification, which may lead to a large burden on the expense.

In a conventional aggregated honeycomb structured body illustrated in Fig. 12 and Figs. 13(a) and 13(b), adhesive layers are formed between a plurality of honeycomb fired bodies. Since adhesive layers do not have a PM capturing function, a regeneration process for a honeycomb structured body does not cause PM combustion in the adhesive layers. Meanwhile, PM combustion occurs in cell walls that capture PMs. This generates a temperature difference between cell walls with PM combustion and cell walls near the adhesive layers without PM combustion, and the temperature difference may cause cracks in the honeycomb structured body.

Cracks occurring due to such a temperature difference result in a decrease in the limit amount of capturing and make it difficult to respond to the desire for increasing the limit amount of capturing in the honeycomb structured body. This phenomenon may easily be generated both in a conventional aggregated honeycomb structured body having the same aperture ratio at the end faces on the exhaust gas inlet side and the exhaust gas outlet side, and in a conventional aggregated honeycomb structured body having different aperture ratios at the end faces on the exhaust gas inlet side and the exhaust gas outlet side as in Patent Document 2.

The present invention has been made in order to solve those problems, and aims to provide a honeycomb structured body that has a high limit amount of PM capturing and hardly causes cracks therein.

### MEANS FOR SOLVING THE PROBLEMS

In order to achieve the above aim, a honeycomb structured body according to claim 1 comprises a honeycomb block formed by bonding a plurality of honeycomb fired bodies together with an adhesive layer interposed between the plurality of honeycomb fired bodies, each of the honeycomb fired bodies having a large number of cells that are longitudinally arranged in parallel with each other with a cell wall therebetween, wherein at least one of the honeycomb fired bodies has a first cell region having a plurality of first cells formed therein and a second cell region having a plurality of second cells formed therein and existing, in such a manner as to surround a part or the whole of the first cell region, between a first peripheral cell wall located on the periphery of the first cell region and a second peripheral cell wall located on the periphery of each honeycomb fired body, at least a part of the second peripheral cell wall defining the second cell region is in contact with the adhesive layer, the first cells and second cells are plugged at alternate ends, the honeycomb structured body has a higher aperture ratio at a first end face than at a second end face, and the first end face has a higher aperture ratio in the second cell region than in the first cell region.

In the honeycomb structured body according to claim 1, a part or the whole of the first cell region located at the central portion of each honeycomb fired body is surrounded by the second cell region which is adjacent to the second peripheral cell wall and has a higher aperture ratio than the first cell region. Since the second cell region is controlled to have a higher aperture ratio than the first cell region, the second cell region can capture a larger amount of PMs than the first cell region. Hence, the amount of heat generated by PM combustion in the regeneration process is larger in the second cell region, which is the peripheral portion of the honeycomb fired body, than in the first cell region which is the central portion of the honeycomb fired body. As a result, the temperature of the second peripheral cell wall near the adhesive layer becomes high enough to raise the temperature of the adhesive layer generating no heat, and thus reduces the temperature difference between the adhesive layer and the honeycomb fired body. Also, the heat conduction slightly decreases the temperature of the second cell region, suppressing the temperature difference between the first cell region and the second cell region. The temperatures inside the honeycomb structured body are therefore equalized.

Further, since the second cell region has a higher aperture ratio than the first cell region, the aperture ratio of the whole end face can be made higher than before when, for example, the aperture ratio of the first cell region is set to the conventional aperture ratio. Accordingly, the amount of PM capturing in the whole honeycomb structured body is also increased, and thereby the limit amount of capturing can be improved.

In the honeycomb structured body according to claim 2, in a cross section perpendicular to the longitudinal direction, the second cells include second large cells each having a larger cell cross-sectional area than each of the first cells and second small cells each having a smaller cell cross-sectional area than each of the second large cells. The aperture ratio of the second region may be made higher than the aperture ratio of the first region in the above manner.

In the honeycomb structured body according to claim 3, in the cross section perpendicular to the longitudinal direction, each of the second small cells has a smaller cell cross-sectional area than each of the first cells. The second small cells are plugged at the first end face of the honeycomb structured body. That is, the second small cells do not capture PMs. Accordingly, setting the cell cross-sectional areas of those second small cells to be smaller than the cell cross-sectional areas of the first cells makes it possible to increase the aperture ratio of the whole first end face, whereby the amount of PM capturing can be increased.

In the honeycomb structured body according to claim 4, in the cross section perpendicular to the longitudinal direction, each of the first cells has a substantially quadrangular cell cross section, each of the second large cells has a substantially octagonal cell cross section, and each of the second small cells has a substantially quadrangular cell cross section. When the first cells each have a substantially quadrangular cell cross section, the honeycomb structured body can ensure the ease of manufacturing. Also, when the second large cells each have a substantially octagonal cell cross section and the second small cells each have a substantially quadrangular cell cross section, the symmetry of those cells is improved. This improvement leads to uniform inflow of exhaust gases to the second large cells, and also leads to improvement of the isostatic strength and the compressive strength of the honeycomb structured body.

As with the honeycomb structured body according to claim 5, in the cross section perpendicular to the longitudinal direction, each of the first cells may have a substantially quadrangular cell cross section, and each of the second large cells and each of the second small cells may have a cell cross section of a shape surrounded by a curved line.
When the first cells each have a substantially quadrangular cell cross section, the honeycomb structured body can ensure the ease of manufacturing. Also, when the second large cells and the second small cells each have a cell cross section of a shape surrounded by a curved line, the symmetry of those cells is improved. This improvement leads to uniform inflow of exhaust gases to the second large cells, and also leads to improvement of the isostatic strength and the compressive strength of the honeycomb structured body.

As with the honeycomb structured body according to claim 6, in the cross section perpendicular to the longitudinal direction, each of the first cells, each of the second large cells, and each of the second small cells may have a substantially quadrangular cell cross section.

In the honeycomb structured body according to claim 7, in the cross section perpendicular to the longitudinal direction, the first cells include first large cells and first small cells, and each of the first large cells has a larger cell cross-sectional area than each of the first small cells. In this way, the first cells in the first cell region may be different in size as is the case with the second cells in the second cell region. Providing different sized first cells in the first cell region makes it possible to increase the aperture ratio at the first end face, similarly to the case where different sized second cells are provided in the second cell region.

In the honeycomb structured body according to claim 8, at the first end face, the first peripheral cell walls each have a similar shape to the second peripheral cell walls. In other words, the first cell region has a similar shape to the first end face, and such shapes allow the width of the second cell region (the shortest distance between the first peripheral cell wall and the second peripheral cell wall) to be generally constant for the entire periphery of the second cell region, thereby leading to uniform generation of PM combustion heat in the second cell region. In contrast, the width of the second cell region may be large at some locations and may be small at some other locations if the first cell region does not have a similar shape to the first end face. In such a case, the PM combustion heat may be large at the locations with a large width of the cell region, and may be small at the locations with a small width of the cell region. As a result, a temperature difference may be generated in the second cell region, and the temperature difference may easily cause cracks.

In the honeycomb structured body according to claim 9, at the first end face, each first peripheral cell wall is formed in a region which is defined assuming that: a given point is on an inside defining line defining the inside of the second peripheral cell wall in contact with the adhesive layer, and moves along the inside defining line; two points are on a line segment at respective distances from the given point, the line segment connecting the given point and the center of the end face of the honeycomb fired body, the respective distances being 1/6 of the length of the line segment and 1/2 of the length of the line segment; and the two points draw paths (one of the paths which is closer to the center is also referred to as an inner path (here, the path drawn by the point at 1/2 of the length) , and the other which is farther from the center is also referred to as an outer path (here, the path drawn by the point at 1/6 of the length) ) corresponding to the movement of the given point so as to define the region. In the case that the first peripheral cell wall is formed on an outer side of the outer path (on the second peripheral cell wall side), the formation area of the second cell region is small. This may lead to an insufficient increase in the PM combustion heat in the second cell region, and may easily cause a temperature difference between the inner and outer cell walls, which is the cause of cracks. In contrast, in the case that the first peripheral cell wall is formed on an inner side of the inner path (on the center side), the PM combustion heat generated in the second cell region is larger than the PM combustion heat generated in the first cell region. This may easily lead to generation of a temperature difference between the first cell region and the second cell region.

In the honeycomb structured body according to claim 10, at the first end face, each first peripheral cell wall is formed in a region which is defined assuming that: a given point is on an inside defining line defining the inside of the second peripheral cell wall in contact with the adhesive layer, and moves along the inside defining line; two points are on a line segment at respective distances from the given point, the line segment connecting the given point and the center of the end face of the honeycomb fired body, the respective distances being 1/4 of the length of the line segment and 1/3 of the length of the line segment; and the two points draw paths corresponding to the movement of the given point so as to define the region. With the formation position of the first peripheral cell wall in such a range, the PM combustion heat in the second cell region may be sufficient and thus the temperature difference between the first cell region and the second cell region may be suppressed.

In the honeycomb structured body according to claim 11, the honeycomb block has a peripheral coat layer formed on the periphery thereof, and at least a part of the second peripheral cell wall defining the second cell region is in contact with the peripheral coat layer. Formation of a peripheral coat layer in the above manner enables suppression of heat diffusion and reduction in the temperature difference in the honeycomb structured body (the temperature difference between the inside of honeycomb fired bodies and the adhesive layers, and the temperature difference between the central portion of the honeycomb structured body and the portions that are around the central portion of the honeycomb structured body and near the peripheral coat layer).

### BRIEF DESCRIPTION OF THE DRAWINGS

Fig. 1 is a perspective view schematically illustrating an example of a honeycomb structured body according to a first embodiment of the present invention.
Figs. 2(a) to 2(c) are perspective views each schematically illustrating an example of a honeycomb fired body that constitutes the honeycomb structured body according to the first embodiment of the present invention.
Fig. 3 (a) is a front view schematically illustrating an end face of the honeycomb fired body illustrated in Fig. 2 (a); and Fig. 3(b) is an X-X line cross-sectional view of the honeycomb fired body illustrated in Fig. 2(a).
Fig. 4 is a front view schematically illustrating an end face of the honeycomb fired body illustrated in Fig. 2(b).
Fig. 5 is a front view schematically illustrating an end face of the honeycomb fired body illustrated in Fig. 2(c).
Figs. 6(a) to 6(c) are explanatory views each illustrating the procedure of determining the formation range of the second cell region in a honeycomb fired body according to the present invention.
Figs. 7(a) to 7(c) are explanatory views each illustrating the procedure of determining the formation range of the second cell region in another honeycomb fired body according to the present invention.
Fig. 8-1(a) is a perspective view schematically illustrating an example of a honeycomb structured body according to a second embodiment of the present invention.
Fig. 8-2(b) is a perspective view schematically illustrating an example of a honeycomb fired body located on the periphery of the honeycomb structured body according to the second embodiment of the present invention; and Fig. 8-2 (c) is a perspective view schematically illustrating an example of another honeycomb fired body located on the periphery of the honeycomb structured body according to the second embodiment of the present invention.
Fig. 9(a) is a perspective view schematically illustrating an example of a honeycomb structured body according to a third embodiment of the present invention; and Fig. 9(b) is a perspective view schematically illustrating an example of a honeycomb fired body located on the periphery of the honeycomb structured body according to the third embodiment of the present invention.
Fig. 10 is a front view schematically illustrating an example of the honeycomb fired body constituting the honeycomb structured body according to a fourth embodiment of the present invention.
Fig. 11 is a graph showing the temperature measurement results in regeneration of honeycomb structured bodies in Example 1, Comparative Example 1, and Comparative Example 2.
Fig. 12 is a perspective view schematically illustrating an example of a conventional honeycomb structured body.
Fig. 13(a) is a perspective view schematically illustrating a honeycomb fired body constituting a conventional honeycomb structured body; and Fig. 13(b) is an A-A line cross-sectional view of the conventional honeycomb structured body illustrated in Fig. 13(a).

### BEST MODE FOR CARRYING OUT THE INVENTION

### (First embodiment)

Hereinafter, a first embodiment of the honeycomb structured body of the present invention will be described with reference to the drawings.
The honeycomb structured body of the present embodiment comprises a honeycomb block formed by bonding a plurality of honeycomb fired bodies together with an adhesive layer interposed between the plurality of honeycomb fired bodies, each of the honeycomb fired bodies having a large number of cells that are longitudinally arranged in parallel with each other with a cell wall therebetween, wherein at least one of the honeycomb fired bodies has a first cell region having a plurality of first cells formed therein and a second cell region having a plurality of second cells formed therein and existing, in such a manner as to surround a part or the whole of the first cell region, between a first peripheral cell wall located on the periphery of the first cell region and a second peripheral cell wall located on the periphery of each honeycomb fired body, at least a part of the second peripheral cell wall defining the second cell region is in contact with the adhesive layer, the first cells and second cells are plugged at alternate ends, the honeycomb structured body has a higher aperture ratio at a first end face than at a second end face, and the first end face has a higher aperture ratio in the second cell region than in the first cell region.

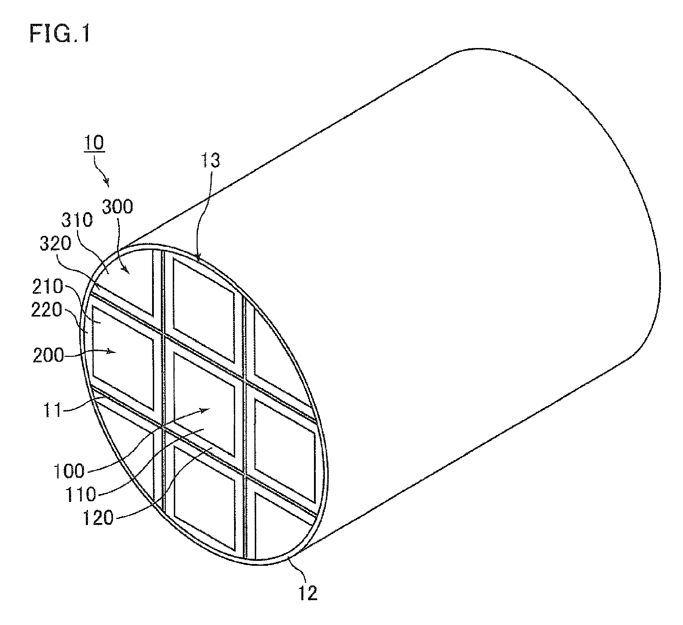

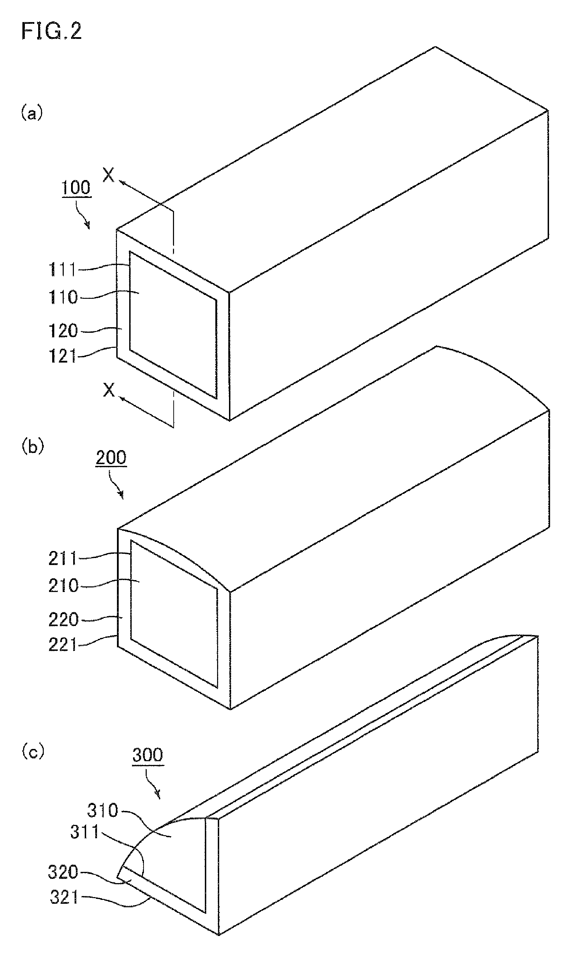

Fig. 1 is a perspective view schematically illustrating an example of the honeycomb structured body according to the first embodiment of the present invention. Figs. 2 (a) to 2 (c) are perspective views each schematically illustrating an example of a honeycomb fired body that constitutes the honeycomb structured body according to the first embodiment of the present invention. A honeycomb structured body 10 in Fig. 1 has a honeycomb block 13 formed by bonding, by interposing adhesive layers 11, a plurality of pillar-shaped honeycomb fired bodies 100, 200, and 300 made of porous silicon carbide. The honeycomb block 13 has a coat layer 12 formed around the periphery thereof.

The honeycomb fired body 100 illustrated in Fig. 2 (a) has a first cell region 110 having a plurality of first cells formed therein and a second cell region 120 surrounding the whole (or the entire periphery) of the first cell region 110 and having a plurality of second cells formed therein. The second cell region 120 spreads between a first peripheral cell wall 111 located on the periphery of the first cell region 110 and a second peripheral cell wall 121 located on the periphery of the honeycomb fired body 100. The second peripheral cell wall 121 defining the second cell region 120 is in contact with the adhesive layer 11 on all four sides, as illustrated in Fig. 1. The first peripheral cell wall 111 has a similar shape to the second peripheral cell wall 121. This means that the first cell region 110 has a similar shape to the end face of the honeycomb fired body 100.

Similarly, the honeycomb fired body 200 illustrated in Fig. 2(b) has a first cell region 210 at the central portion and a second cell region 220 that surrounds the whole (the entire periphery) of the first cell region 210. The second cell region 220 exists between a first peripheral cell wall 211 located on the periphery of the first cell region 210 and a second peripheral cell wall 221 located on the periphery of the honeycomb fired body 200. As illustrated in Fig. 1, the second peripheral cell wall 221 defining the second cell region 220 is in contact with the adhesive layer 11 on three sides. The first peripheral cell wall 211 does not have a similar shape to the second peripheral cell wall 221.

The honeycomb fired body 300 illustrated in Fig. 2(c), unlike the honeycomb fired bodies 100 and 200 each having the second cell region surrounding the whole of first cell region, has a first cell region 310 and a second cell region 320 surrounding a part of the first cell region 310. The second cell region 320 exists between a first peripheral cell wall 311 located on the periphery of the first cell region 310 and a second peripheral cell region 321 that is located on the periphery of the honeycomb fired body 300 and is in contact with the adhesive layer 11. That is, as illustrated in Fig. 1, the second peripheral cell wall 321 defining the second cell region 320 is in contact with the adhesive layer 11 on two sides.

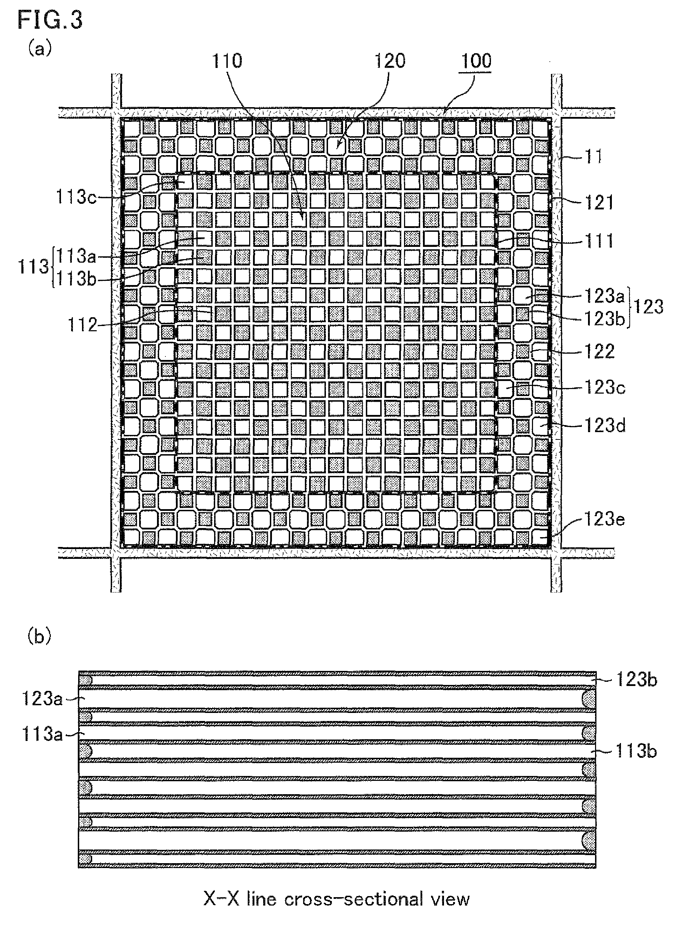

In the honeycomb structured body of the present embodiment, the first cells formed in the first cell region and the second cells formed in the second cell region are plugged at alternate ends, and the second cell region has a higher aperture ratio than the first cell region at the first end face that serves as the exhaust gas inlet-side end face. Specific structures relating to those aperture ratios will be described with reference to Figs. 3 to 5.
An aperture ratio herein refers to a ratio (B/A) of the total cell cross-sectional area (B) of cells open at an end face of a honeycomb structured body to the area (A) of the above end face which is defined by the periphery of the end face.

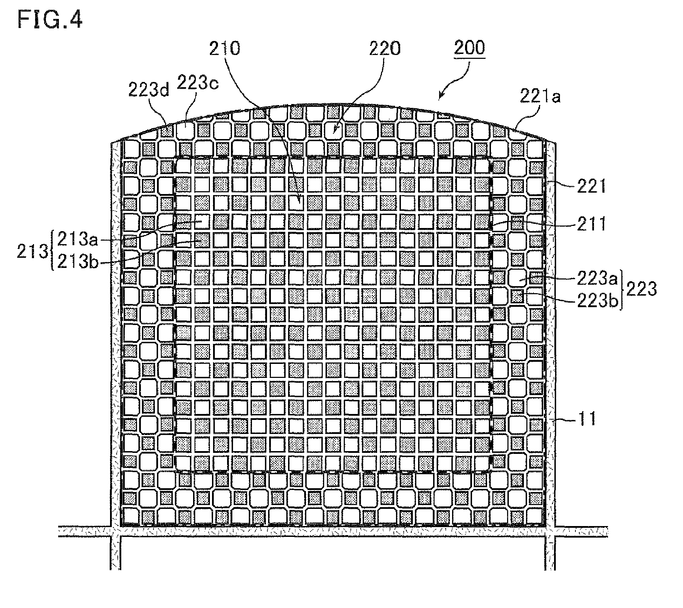

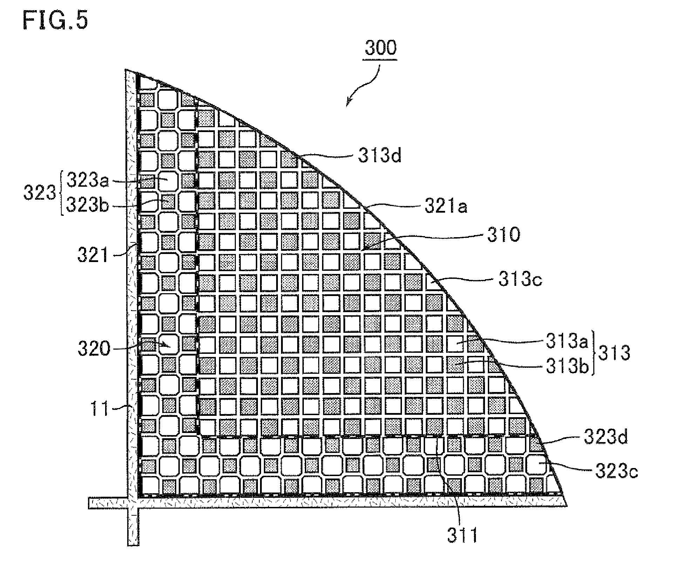

Fig. 3 (a) is a front view schematically illustrating an end face of the honeycomb fired body illustrated in Fig. 2 (a). Fig. 3 (b) is an X-X line cross-sectional view of the honeycomb fired body illustrated in Fig. 2(a). Fig. 4 is a front view schematically illustrating an end face of the honeycomb fired body illustrated in Fig. 2 (b). Fig. 5 is a front view schematically illustrating an end face of the honeycomb fired body illustrated in Fig. 2(c).
An end face herein refers to an outer face having cell openings thereat among outer faces of a honeycomb structured body or a honeycomb fired body. A side face herein refers to any of the other outer faces having no cell openings thereat unlike the end faces.

In the honeycomb fired body 100 illustrated in Figs. 3 (a) and 3(b), the first peripheral cell wall 111 surrounds first cells 113 (cells 113a and 113b) having a substantially quadrangular cell cross section, so as to form the first cell region 110. The cells 113a are open on the first end face side illustrated in Fig. 3, whereas the cells 113b are plugged on the first end face side and are open on the second end face side. That is, the cells 113a and the cells 113b are alternately plugged as in a checkerboard pattern. The cells 113a and the cells 113b have almost the same cell cross-sectional area, which means that there is no size difference between those cells. Accordingly, the first cell region does not have much difference in the aperture ratio between the first end face and the second end face.

As above, the cells 113 in the first cell region 110 each have a substantially quadrangular cell cross section. Meanwhile, each cell 113c at the four corners of the first cell region 110 has a substantially pentagonal cell cross section, which is formed by cutting one of the corners of a quadrangle. More specifically, not all of the cells 113 in the first cell region 110 has a substantially quadrangular cell cross section, i.e., a large number of the cells each having a substantially quadrangular cell cross section and a small number of the cells each having a substantially pentagonal cell cross section are mixed. In the present invention, even if a region includes cells each having a cell cross section of a shape other than a substantial quadrangle, the cells in the region are treated as cells each having a substantially quadrangular cell cross section as long as the basic formation pattern of the cells in the region is that cells each having a substantially quadrangular cell cross section (hereinafter the formation pattern of cells in the first cell region is also referred to as a first formation pattern) are repeatedly arranged. From another point of view, cells each having a cell cross-sectional shape different from the formation pattern can be regarded as cells that are deformed when cells each having a cell cross-sectional shape of the formation pattern have come into contact with the first peripheral cell wall or the second peripheral cell wall. The cell cross-sectional shape in the formation pattern of cells is not limited to a substantial quadrangle, and may be any shape such as a substantial triangle; a substantial pentagon; a substantial hexagon; a substantial octagon; a substantial circle; a substantial ellipse; a shape surrounded by straight lines and curved lines, a shape surrounded only by curved lines, or a shape substantially similar to them; or a combination of those shapes.
A cross section herein means a perpendicular cross section of a honeycomb structured body to the longitudinal direction of honeycomb fired bodies.

The second cell region 120 in the honeycomb fired body 100 has a belt-like shape between the first peripheral cell wall 111 and the second peripheral cell wall 121 in such a way as to surround the whole of the first cell region 110. The second peripheral cell wall 121 defining the second cell region 120 is in contact with the adhesive layer 11 on the entire periphery. The second cell region 120 has second cells 123a having a substantially octagonal cell cross section and second cells 123b having a substantially quadrangular cell cross section. Since the second cells 123a each have a larger cell cross-sectional area than the second cells 123b, the second cells 123a in the present embodiment are referred to as second large cells, and the second cells 123b are referred to as second small cells. The second large cells 123a are open on the first end face side illustrated in Fig. 3 (a) , whereas the second small cells 123b are plugged on the first end face side and open on the second end face side. That is, the second large cells 123a and the second small cells 123b are alternately plugged.

As illustrated in Fig. 3(a), the formation pattern of cells in the second cell region 120 (hereinafter also referred to as a second formation pattern) is that the second large cells 123a each having a substantially octagonal cell cross section and the second small cells 123b each having a substantially quadrangular cell cross section are repeatedly arranged. In addition to those cells, the second cell region 120 has second cells 123c having a substantially hexagonal cell cross section which are in contact with the first peripheral cell wall 111; second cells 123d having a substantially hexagonal cell cross section which are in contact with the second peripheral cell wall 121; and second cells 123e having a substantially pentagonal cell cross section which are at the four corners of the second cell region 120. Although those second cells 123c, 123d, and 123e each do not have a cell cross-sectional shape of the second formation pattern, those cells can be regarded as second cells deformed when the second large cells 123a sequentially formed according to the second pattern have come into contact with the first peripheral cell wall 111 or the second peripheral cell wall 121. Based on this concept, the second cells in the second cell region 120 each are considered to have a substantial octagonal cell cross section and a substantial quadrangular cell cross section in the present embodiment.

In the honeycomb fired body 100 of the present embodiment, the second large cells 123a each have a larger cell cross-sectional area than the first cells 113. Further, as described above, the second large cells 123a each have a larger cell cross-sectional area than the second small cells 123b. Further, the second small cells 123b each have a smaller cell cross-sectional area than the first cells 113. That is, in terms of the size of the cell cross-sectional area, the second large cells 123a are the largest, the first cells 113 are the second largest, and the second small cells 123b are the smallest. In this way, the second large cells 123a each are set to have a larger cell cross-sectional area than the first cells 113 and the second small cells 123b each are set to have a smaller cell cross-sectional area than the second large cells 123a such that the second cell region 120 can have a higher aperture ratio than the first cell region 110. Further, the second small cells 123b each are set to have a smaller cell cross-sectional area than the first cells 113 such that the proportion of the closed second small cells 123b, which do not contribute to improvement in the aperture ratio in the second cell region 120, is smaller and the second cell region 120 can efficiently have a higher overall aperture ratio than the first cell region 110.

Also in the honeycomb fired body 200 illustrated in Fig. 4, first cells 213 (213a, 213b) each having a quadrangular cell cross section constitute a first cell region 210 in a manner that a first peripheral cell wall 211 surrounds the first cells 213. The second cell region 220 is formed to surround the entire first cell region 210. The second cell region 220 has second large cells 223a having a substantially octagonal cell cross section and second small cells 223b having a substantially quadrangular cell cross section.

The first formation pattern of the cells in the first cell region 210 is that cells each having a substantially quadrangular cross section are repeatedly arranged, and the second formation pattern of the cells in the second cell region 220 is that cells each having a substantially octagonal or substantially quadrangular cross section are repeatedly arranged. As with the honeycomb fired body 100, the honeycomb fired body 200 has cells each of which has a cell cross-sectional shape different from the first formation pattern and the second formation pattern. In the honeycomb fired body 200, a curved portion 221a included in the second peripheral cell wall 221 especially deforms the second cells in contact therewith into shapes similar to the shapes of the second cells 223c and the second cells 223d. Still, the second cells 223c and the second cells 223d can be regarded as the second cells that the second large cells 223a and the second small cells 223b in the second formation pattern have been deformed. Hence, in the present embodiment, the second cells can be considered to have substantially octagonal and substantially quadrangular cell cross sections.

In the honeycomb fired body 200, the second large cells 223a each have a larger cell cross-sectional area than the first cells 213, and the second small cells 223b each have a smaller cell cross-sectional area than the first cells 213. Thereby, the second cell region can efficiently have a higher aperture ratio than the first cell region, as in the honeycomb fired body 100.

Next, the detailed structure of the honeycomb fired body 300 is described. As illustrated in Fig. 5, first cells 313 (313a, 313b) each having a substantially quadrangular cell cross section constitute a first cell region 310 in a manner that a first peripheral cell wall 311 and a curved portion 321a of a second peripheral cell wall surround the first cells. In other words, the curved portion 321a of the second peripheral cell wall defines the first cell region 310 as well as the second cell region 320. The second cell region 320 is provided along two straight sides of the second peripheral cell wall 321 defining the second cell region 320 in such a manner as to surround a part of the first cell region 310. The second cell region 320 has second large cells 323a each having a substantially octagonal cell cross section and second small cells 323b each having a substantially quadrangular cell cross section.

The first formation pattern of the cells in the first cell region 310 is that cells each having a substantially quadrangular cross section are repeatedly arranged, and the second formation pattern of the cells in the second cell region 320 is that cells each having a substantially octagonal or substantially quadrangular cross section are repeatedly arranged. As with the honeycomb fired body 100, the honeycomb fired body 300 has cells each of which has a cell cross-sectional shape different from the first formation pattern and the second formation pattern. In the honeycomb fired body 300, a curved portion 321a included in the second peripheral cell wall 321 especially deforms the first cells and the second cells in contact therewith into respective shapes similar to the shapes of the first cells 313c and the first cells 313d, and the shapes of the second cells 323c and the second cells 323d. Still, the first cells 313c and the first cells 313d can be regarded as the first cells that the first cells 313 in the first formation pattern have been deformed, and the second cells 323c and the second cells 323d can be regarded as the second cells that the second large cells 323a and the second small cells 323b in the second formation pattern have been deformed. Hence, in the present embodiment, the first cells can be considered to have a substantially quadrangular cell cross section and the second cells can be considered to have substantially octagonal and substantially quadrangular cell cross sections.

In the honeycomb fired body 300, the second large cells 323a each have a larger cell cross-sectional area than the first cells 313, and the second small cells 323b each have a smaller cell cross-sectional area than the first cells 313. Thereby, the second cell region can efficiently have a higher aperture ratio than the first cell region, as in the honeycomb fired body 100.

Either one end face of a honeycomb structured body, having the end faces of the honeycomb fired bodies 100, 200, and 300 with higher aperture ratios than the other end faces, is referred to as a first end face. This structure makes it possible to improve the aperture ratio of the whole end face of the honeycomb structured body, and therefore to improve the amount of PM capturing.

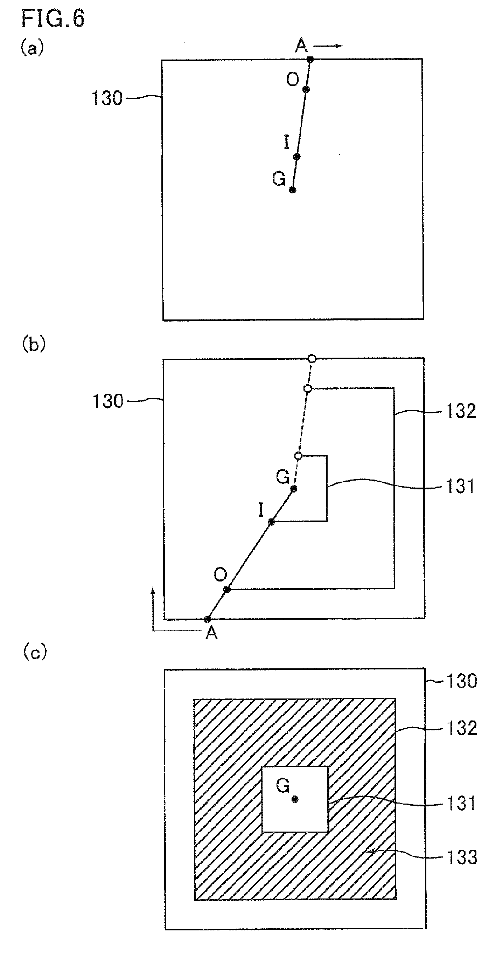

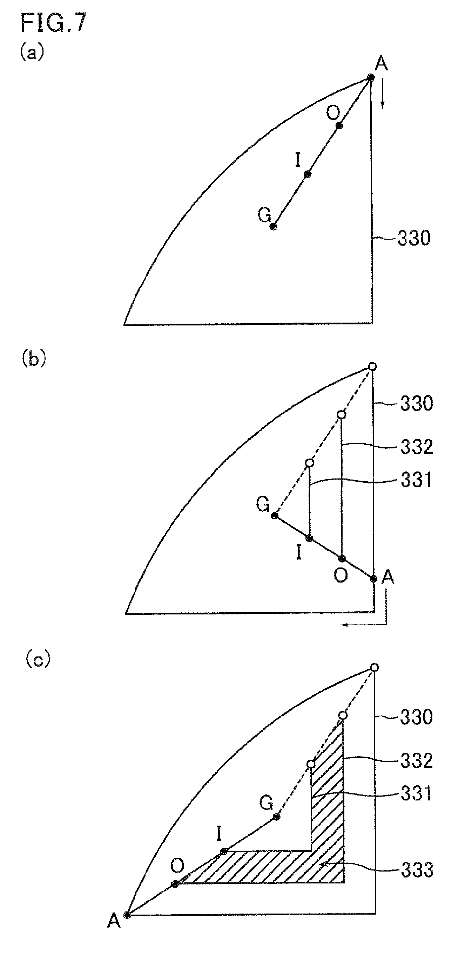

The formation position of each first peripheral cell wall defining the formation range of the second cell region is not particularly limited as long as the following conditions are satisfied. Specifically, the conditions are that the combustion heat increases as the amount of PM capturing in the second cell region increases, and that the second cell region is prevented from becoming very large to such an extent that almost all the cells become second cells, as in conventional honeycomb structured bodies. In consideration of those two conditions, each first peripheral cell wall at the first end face of the honeycomb structured body is preferably formed in a region defined in the following way. That is, suppose that a given point is on an inside defining line defining the inside of the second peripheral cell wall in contact with the adhesive layer, and moves along the inside defining line; also, two points are provided on a line segment at respective predetermined distances from the given point toward the center of the honeycomb fired body, and the two points draw paths corresponding to the movement of the given point. Then, the above region is defined by the paths. The method of determining the preferable range for the first peripheral cell wall is described below. Figs. 6(a) to 6(c) are explanatory views each illustrating the procedure of determining the formation range of the second cell region in a honeycomb fired body according to the present invention. Figs. 7(a) to 7(c) are explanatory views each illustrating the procedure of determining the formation range of the second cell region in another honeycomb fired body according to the present invention.

In Fig. 6(a), the honeycomb fired body 100 (see Figs. 2 and 3) is seen from the first end face side of the honeycomb structured body, and an inside defining line 130 is illustrated which defines the inside of the second peripheral cell wall in contact with an adhesive layer (here, the inside is the side opposite to the side in contact with the adhesive layer of the second peripheral cell wall). Since the entire second peripheral cell wall 121 of the honeycomb fired body 100 is in contact with the adhesive layer 11, the inside defining line 130 correspondingly exists entirely along the second peripheral cell wall 121. Here, there are T-shaped parts (see Fig. 3) where the second peripheral cell wall 121 and the cell walls 122 are connected. The inside defining line 130 is determined assuming that the cell walls 122 do not exist at those T-shaped parts. First, a given point A is taken on the inside defining line 130. On a line segment AG connecting the point A and the center G of the end face of the honeycomb fired body, points O and I respectively forming an outer path and an inner path are taken. The point O is at a distance of a predetermined percentage S of the line segment AG from the point A. The point I is at a distance of a predetermined percentage L (L > S) of the line segment AG from the point A.

Next, the point A moves along the inside defining line 130 as illustrated in Fig. 6(b), and the points O and I will also move according to the movement of the point A so as to respectively draw a path (outer path) 132 and a path (inner path) 131.

As the point A further moves along the entire inside defining line 130 as illustrated in Fig. 6(c), the points O and I move to draw closed paths, i.e., the outer path 132 and the inner path 131. In a region 133 between those outer path 132 and the inner path 131, the first peripheral cell wall is formed.

In the honeycomb fired body 100 illustrated in Fig. 1, Fig. 2 (a) , and Fig. 3, the second cell region 120 surrounds the entire first cell region 110 and the entire second peripheral cell wall 121 is in contact with the adhesive layer 11. In contrast, in the honeycomb fired body 300 illustrated in Fig. 1, Fig. 2 (c) , and Fig. 5, the second cell region 320 surrounds a part of the first cell region 310, and the second peripheral cell wall 321 except the curved portion 321a is in contact with the adhesive layer 11. In the following, description is given to the method of determining the formation range of the first peripheral cell wall in the case that the second cell region surrounds a part of the first cell region and a part of the second peripheral cell wall is in contact with the adhesive layer as in the honeycomb fired body 300.

As illustrated in Fig. 7(a), similarly to the honeycomb fired body 100, a given point A is taken on an inside defining line 330, and points O and I are taken on a line segment AG connecting the point A and the center G of the end face of the honeycomb fired body 300. Next, as illustrated in Fig. 7(b), the point A moves along the inside defining line 330 corresponding to the portion of the second peripheral cell wall in contact with the adhesive layer 11 except the curved portion 321a, and the points O and I will respectively draw an outer path 332 and an inner path 331. Subsequently, as the point A further moves along the inside defining line 330 as illustrated in Fig. 7(c), the points O and I move to draw, unlike the honeycomb fired body 100, unclosed paths, i. e. , the outer path 332 and the inner path 331. In a region 333 between those outer path 332 and inner path 331, the first peripheral cell wall is formed. For the portions other than the region 333 between the outer path 332 and the inner path 331, the ends of the first peripheral cell wall 311 formed by the above procedure may be extended until they reach the curved portion 321a.

The distances from the point A to the points O and I are not particularly limited, and are preferably 1/6 and 1/2 of the length of the line segment AG respectively, and are more preferably 1/4 and 1/3 of the length of the line segment AG respectively. If the first peripheral cell wall is formed on the outer side of the outer path drawn by the point O being at the above distance from the point A, the formation area of the second cell region may be small and the PM combustion heat in the second cell region therefore may not be sufficiently increased, which may easily cause a temperature difference between the inside and the outside of the cell wall. In contrast, if the first peripheral cell wall is formed on the inner side of the inner path drawn by the point I being at the above distance from the point A, the PM combustion heat generated in the second cell region may be larger than the PM combustion heat generated in the first cell region, and thereby a temperature difference may easily be caused between the first cell region and the second cell region.

Here, since the second cell region has a higher aperture ratio than the first cell region, the aperture ratio of the entire end face can be made higher than before if, for example, the aperture ratio of the first cell region is set to be the same as the conventional aperture ratio. Such a high aperture ratio can lead to an increase in the amount of PM capturing in the entire honeycomb structured body, and therefore can improve the limit amount of capturing.

Next, the method of manufacturing the honeycomb structured body of the present embodiment is described.
(1) A formation process of producing a honeycomb molded body is performed by extrusion-molding a wet mixture that contains ceramic powder and a binder. Specifically, silicon carbide powders having different average particle sizes from each other (ceramic powder), an organic binder, a liquid plasticizer, a lubricant, and water are mixed to prepare a wet mixture for manufacturing a honeycomb molded body. Then, the above wet mixture is fed into an extruder. By feeding the wet mixture into the extruder and extrusion-molding the mixture in this way, a honeycomb molded body is manufactured which has the shape illustrated in Fig. 3 and has unplugged cells.
(2) Next, the honeycomb molded body is cut to have a predetermined length, and dried by using a drying apparatus such as a microwave drying apparatus, a hot-air drying apparatus, a dielectric drying apparatus, a reduced-pressure drying apparatus, a vacuum drying apparatus, and a freeze drying apparatus. Thereafter, a plugging process is carried out in which predetermined cells each are filled with a plug material paste that is to be a plug. Here, those conditions conventionally used for manufacturing honeycomb fired bodies can be adopted as the conditions of the cutting process, the drying process and the plugging process.
(3) The honeycomb molded bodies are then processed by a degreasing process which is for heating the organic substances of the honeycomb molded body in a degreasing furnace. Then, the honeycomb molded body is transported to a firing furnace so as to be processed by a firing process, whereby a honeycomb fired body is manufactured. Here, those conditions conventionally used for manufacturing honeycomb fired bodies can be adopted as the conditions of the degreasing process and the firing process.
(4) Subsequently, an adhesive paste is applied to a predetermined side face of the honeycomb fired body having the predetermined end of each cell plugged therein such that an adhesive paste layer is formed. After that, another honeycomb fired body is successively stacked onto the adhesive paste layer. Repeating this process leads to manufacturing of an aggregate of honeycomb fired bodies in which a predetermined number of honeycomb fired bodies are combined. The adhesive paste used here contains, for example, an inorganic binder, an organic binder, and inorganic particles. Moreover, the adhesive paste may further contain at least one of inorganic fibers and whiskers.
(5) The aggregate of honeycomb fired bodies is heated to dry and solidify the adhesive paste layer into an adhesive layer, and thereby a honeycomb block is manufactured. Next, a periphery processing process is performed in which the periphery of the honeycomb block is cut with a diamond cutter, to manufacture a round pillar-shaped honeycomb block.
(6) A coat layer forming process is further carried out in which a coating material paste is applied to the periphery of the substantially round-pillar shaped honeycomb block, and is dried and solidified into a coat layer. The coating material paste may have the same composition as the above adhesive paste, or may have a different composition from the adhesive paste. Here, a coat layer is not necessarily provided, and may be provided according to need. The above processes enable manufacturing of the honeycomb structured body of the present embodiment.

Hereinafter, the effects of the honeycomb structured body according to the present embodiment will be listed.
(1) In the honeycomb structured body according to the present embodiment, a part or the whole of the first cell region located at the central portion of each honeycomb fired body is surrounded by the second cell region which is adjacent to the second peripheral cell wall and has a higher aperture ratio than the first cell region. Since the second cell region is controlled to have a higher aperture ratio than the first cell region, the second cell region can capture the same amount of PMs as the first cell region even though having a smaller inflow amount of gas per unit area than the first cell region. Hence, the amount of heat generated by PM combustion in the regeneration process is the same in the first cell region, which is the central portion of the honeycomb fired body, and in the second cell region which is the peripheral portion of the honeycomb fired body. As a result, the temperature of the second peripheral cell wall near the adhesive layer becomes high enough to raise the temperature of the adhesive layer generating no heat, and thus reduces the temperature difference between the adhesive layer and the honeycomb fired body. Also, the heat conduction slightly decreases the temperature of the second cell region, suppressing the temperature difference between the first cell region and the second cell region. The temperatures inside the honeycomb structured body are therefore equalized.
(2) Further, since the second cell region has a higher aperture ratio than the first cell region, the aperture ratio of the whole end face can be made higher than before when, for example, the aperture ratio of the first cell region is set to the conventional aperture ratio. Accordingly, the amount of PM capturing in the whole honeycomb structured body is also increased, and thereby the limit amount of capturing can be improved.
(3) In the honeycomb structured body according to the present embodiment, in the cross section perpendicular to the longitudinal direction, each of the second small cells has a smaller cell cross-sectional area than each of the first cells. The second small cells are plugged at the first end face of the honeycomb structured body. That is, the second small cells do not capture PMs. Accordingly, setting the cell cross-sectional areas of those second small cells to be smaller than the cell cross-sectional areas of the first cells makes it possible to increase the aperture ratio of the whole first end face, whereby the amount of PM capturing can be increased.
(4) In the honeycomb structured body according to the present embodiment, in the cross section perpendicular to the longitudinal direction, each of the first cells has a substantially quadrangular cell cross section, each of the second large cells has a substantially octagonal cell cross section, and each of the second small cells has a substantially quadrangular cell cross section. When the first cells each have a substantially quadrangular cell cross section, the honeycomb structured body can ensure the ease of manufacturing. Also, when the second large cells each have a substantially octagonal cell cross section and the second small cells each have a substantially quadrangular cell cross section, the symmetry of those cells is improved. This improvement leads to uniform inflow of exhaust gases to the second large cells, and also leads to improvement of the isostatic strength and the compressive strength of the honeycomb structured body.
(5) In the honeycomb structured body according to the present embodiment, at the first end face, the first peripheral cell walls each have a similar shape to the second peripheral cell walls. Such shapes allow the width of the second cell region (the shortest distance between the first peripheral cell wall and the second peripheral cell wall) to be generally constant for the entire periphery of the second cell region, thereby leading to uniform generation of PM combustion heat in the second cell region.
(6) In the honeycomb structured body according to the present embodiment, at the first end face, each first peripheral cell wall is formed in a region defined in the following way. That is, suppose that a given point is on an inside defining line defining the inside of the second peripheral cell wall in contact with the adhesive layer, and moves along the inside defining line; also, two points are provided on a line segment at respective predetermined distances from the given point, the line segment connecting the given point and the center of the end face of the honeycomb fired body. The two points draw paths corresponding to the movement of the given point so as to define the region. With the formation position of the first peripheral cell wall in such a range, the PM combustion heat in the second cell region may be sufficient and thus the temperature difference between the first cell region and the second cell region may be suppressed.

Hereinafter, Examples are shown which more specifically disclose the first embodiment of the present invention. The present invention is not limited to those Examples.

### (Example 1)

An amount of 52.8% by weight of a silicon carbide coarse powder having an average particle diameter of 22 µm and 22.6% by weight of a silicon carbide fine powder having an average particle diameter of 0.5 µm were mixed. To the resulting mixture, 2.1% by weight of an acrylic resin, 4. 6% by weight of an organic binder (methylcellulose), 2.8% by weight of a lubricant (UNILUB, manufactured by NOF Corporation), 1.3% by weight of glycerin, and 13.8% by weight of water were added, and then the mixture was kneaded to prepare a mixed composition (wet mixture). The mixed composition thereby prepared was extrusion-molded such that a raw honeycomb molded body was manufactured which had substantially the same cross-sectional shape as the cross-sectional shape illustrated in Figs. 2(a) to 2(c) (see Figs. 3 to 5) with cells not plugged.

Next, the raw honeycomb molded body was dried by using a microwave drying apparatus to have a dried honeycomb molded body. A paste having the same composition as the above raw molded body was then filled into predetermined cells of the dried honeycomb molded body to plug the cells, and the dried honeycomb molded body was dried again by using a drying apparatus.

The dried honeycomb molded body was degreased at 400°C, and then fired at 2200°C under ordinary pressure argon atmosphere for three hours. Thereby, a honeycomb fired body was manufactured which was made of a silicon carbide sintered body having a porosity of 45%, an average pore diameter of 15 µm, a size of 34. 3 mm (height) x 34.3 mm (width) x 150 mm (length) , and the first cell region and the second cell region with the respective numbers of cells (cell density) of 46.5 pcs/cm² and 46.5 pcs/cm² and respective cell wall thicknesses of 0.25 mm and 0.25 mm. Each of the cells in the first cell region of the honeycomb fired body had a quadrangular cross section, and each of the cells in the second cell region, except the cells in the peripheral cut portions, had a quadrangular, pentagonal, or octagonal cross section.

A heat-resistant adhesive paste was prepared which contained 30% by weight of alumina fibers having an average fiber diameter of 5 µm and an average fiber length of 20 µm, 21% by weight of silicon carbide particles having an average particle diameter of 0.6 µm, 15% by weight of silica sol (solid content of 30% by weight), 5.6% by weight of carboxymethylcellulose, and 28.4% by weight of water. With this paste, a plurality of honeycomb fired bodies were bonded. The bonded product was dried at 120°C and then cut by using a diamond cutter into a round pillar-shaped honeycomb block that has 1.0-mm thick adhesive layers.

With the adhesive paste, a coating material paste layer having a thickness of 0.2 mm (in the portions where the cell wall was cut, the thickness from the end of the projected part of the cell wall) was formed on the periphery of the honeycomb block. The coating material paste layer was dried at 120°C, whereby a round pillar-shaped honeycomb structured body was manufactured which had a coat layer formed on the periphery thereof and had a size of 143.8 mm (diameter) x 150 mm (length).

### (Comparative Example 1)

A honeycomb structured body was manufactured by the same procedure as that in Example 1, except that all the cells had the same cell cross-sectional shape as the cells in the first cell regions in Example 1. Each of the cells of the honeycomb fired bodies, except the cells in the peripheral cut portions, had a quadrangular cell cross section.

### (Comparative Example 2)

A honeycomb structured body was manufactured by the same procedure as that in Example 1, except that all the cells had the same cell cross-sectional shape as the cells in the second cell regions in Example 1. The cells of the honeycomb fired bodies, except the cells in the peripheral cut portions, had a quadrangular, pentagonal, or octagonal cross section.

### (Measurement of temperature)

A thermocouple was inserted in an exhaust gas inlet side cell on the central portion and an exhaust gas inlet side cell on the outermost periphery of each of samples of the honeycomb structured bodies according to Example 1 and Comparative Examples 1 and 2, so that the temperatures of the central portion and the peripheral portion of each of the honeycomb structured bodies can be measured. Then, for each of the honeycomb structured bodies, the temperature profile of the PM capturing (11 g/L) from the start to the end of the regeneration process was measured. From the temperature profile, the highest temperatures of the respective portions were determined. Thereafter, those highest temperatures of the central portion and the peripheral portion of each honeycomb structured body were used to determine the difference in the highest temperatures of the honeycomb structured body.

### (Measurement of regeneration rate)

The weight of each of the honeycomb structured bodies of Example 1 and Comparative Examples 1 and 2 was measured in advance in the state where no particulate is accumulated. Next, the honeycomb structured body was set to capture a predetermined amount of PMs under the capturing condition that a 1.6-L engine was driven for a predetermined time at the number of rotations of 2000 min⁻¹ and a torque of 40 Nm. Here, the honeycomb structured body was taken out once for measurement of the weight. Then, the engine was driven for ten minutes by the post injection method to put the honeycomb structured body into the regeneration process. Then, the weight of the honeycomb structured body after the regeneration process was measured. The regeneration rate (%) was calculated from the following formula (1), with the decreased amount of PMs. Regeneration rate (%) = (amount of PMs before regeneration - amount of PMs after regeneration) / amount of PMs before regeneration ... (1)

### (Measurement of limit amount of PM capturing)

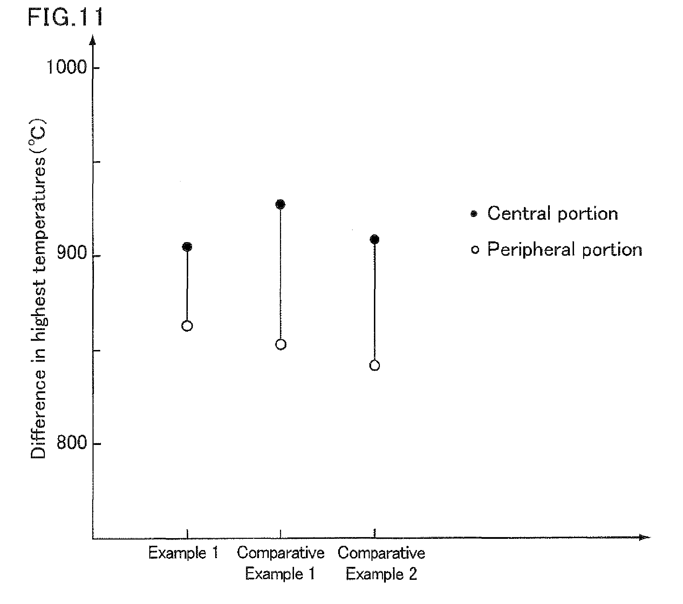

The limit amount of PM capturing of each of the honeycomb structured bodies of Example 1 and Comparative Examples 1 and 2 was determined by almost the same method as the method of determining the regeneration rate. More specifically, the engine was first driven for a predetermined time under the same condition as that for the method of determining the regeneration rate so that the regeneration process occurred. Here, the weight of the honeycomb structured body was measured before and after the regeneration process. This operation was repeated with the driving time of the engine extended each time. The appearance of the honeycomb structured body was observed at the time of the regeneration process, and occurrence of cracks in the honeycomb structured body was checked by cutting the honeycomb structured body at the adhesive layer portion and observing the honeycomb fired bodies. The amount of captured PMs at which cracks occurred was determined as the limit amount of PM capturing. Table 1 shows the evaluation results of the above respective measurements (such as highest temperatures, difference in highest temperatures, regeneration rate, and limit amount of PM capturing). Also, Fig. 11 illustrates a graph showing the results of the temperature measurement in regeneration of the honeycomb structured bodies of Example 1 and Comparative Examples 1 and 2.

**[Table 1]**

| | Amount of captured PMs [g/L] | Cracks in the PM capturing | Limit amount of PM capturing [g/L] | Highest temperature [C°] | | Difference in highest temperatures [C°] | Regeneration rate [%] |
|---|---|---|---|---|---|---|---|
| | | | | Central portion | Peripheral portion | | |
| Example 1 | 12 | Not occurred | N/A | 903 | 861 | 42 | 76 |
| Comparative Example 1 | 12 | Occurred | 12 | 926 | 859 | 67 | 77 |
| Comparative Example 2 | 12 | Occurred | 12 | 906 | 846 | 60 | 76 |

The honeycomb structured body of Example 1 showed a difference in the highest temperatures of 42°C and a regeneration rate of 76%, and had no crack when the amount of captured PMs reached 12 g/L. In contrast, the honeycomb structured body of Comparative Example 1 showed a difference in the highest temperatures of as high as 67°C and a regeneration rate of 77%, and had cracks when the amount of captured PMs reached 12 g/L. These results are probably due to the following reason. In Comparative Example 1, PMs were captured uniformly in the central portion and the peripheral portion of each honeycomb fired body constituting the honeycomb structured body. Accordingly, the PM combustion heat shortage, which occurred in the peripheral portion of the honeycomb fired body in contact with the adhesive layer not generating heat, could not be covered, and therefore the increase in the temperature difference between the central portion and the peripheral portion of the honeycomb structured body caused an increase in the thermal stress. The above assumption is supported by the difference in the highest temperatures in Comparative Example 1 of 67°C which was increased from the difference in the highest temperatures in Example 1 of 42°C.

Also, the honeycomb structured body of Comparative Example 2 showed a regeneration rate of 76% and had cracks when the amount of captured PMs reached 12 g/L. The difference in the highest temperatures in Comparative Example 2 was 60°C.
The following phenomenon is regarded as the cause of the cracks in the honeycomb structured body.
That is, since all the cells in the honeycomb fired body have the same cross-sectional area in Comparative Examples 1 and 2, PMs accumulate uniformly on the cell walls of each honeycomb fired body, and heat generates uniformly inside the honeycomb fired body at the time of PM combustion in the regeneration process. Meanwhile, no heat generates in the adhesive layers that bond the honeycomb fired body. Accordingly, heat generated near the peripheries of the honeycomb fired bodies is transferred to the adhesive layers, and as a result, the temperature difference becomes large between the portions of the adhesive layers inside the honeycomb structured body and the portions near the centers of the honeycomb fired bodies (i.e., a large temperature gradient occurs). Hence, a larger temperature distribution occurs inside the honeycomb structured body, which leads to easy occurrence of cracks in the honeycomb structured body.

In contrast, in Example 1, the first cell region of the honeycomb fired body, located at the central portion, and the second cell region surrounding the first cell region have different aperture ratios, and the second cell region has a larger aperture ratio than the first cell region. More specifically, in the second cell region of the honeycomb fired body, the cells open on the exhaust gas inlet side each have a larger cross-sectional area than the cells open on the exhaust gas outlet side. The second cell region of the honeycomb fired body therefore has a large accumulation amount of PMs and has a larger amount of heat generated in the peripheral portions (portions in contact with the adhesive layers) of the honeycomb fired bodies at the time of PM combustion in the regeneration process. As a result, the temperatures of the adhesive layers rise to decrease the temperature difference between the adhesive layers inside the honeycomb structured body and the portions near the centers of the honeycomb fired bodies (temperature gradient is not likely to occur). Hence, the temperatures inside the honeycomb structured body are equalized, and for this reason, cracks are not likely to occur in the honeycomb structured body.

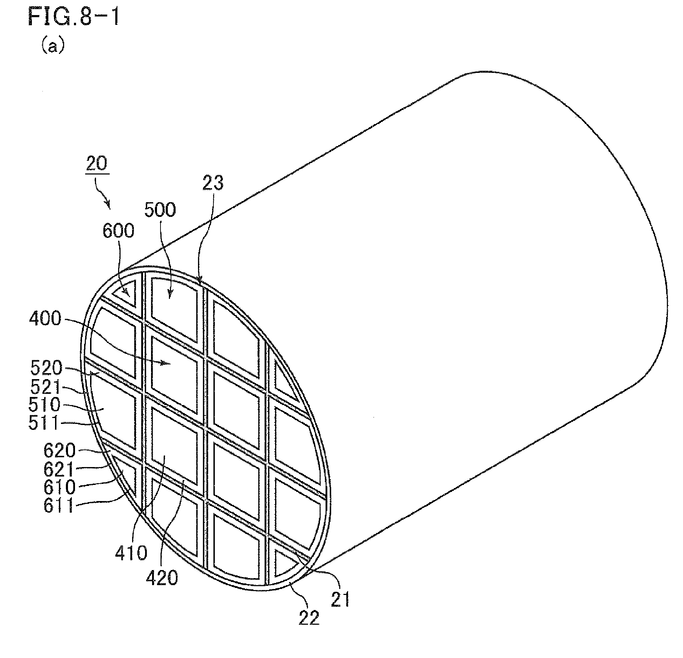

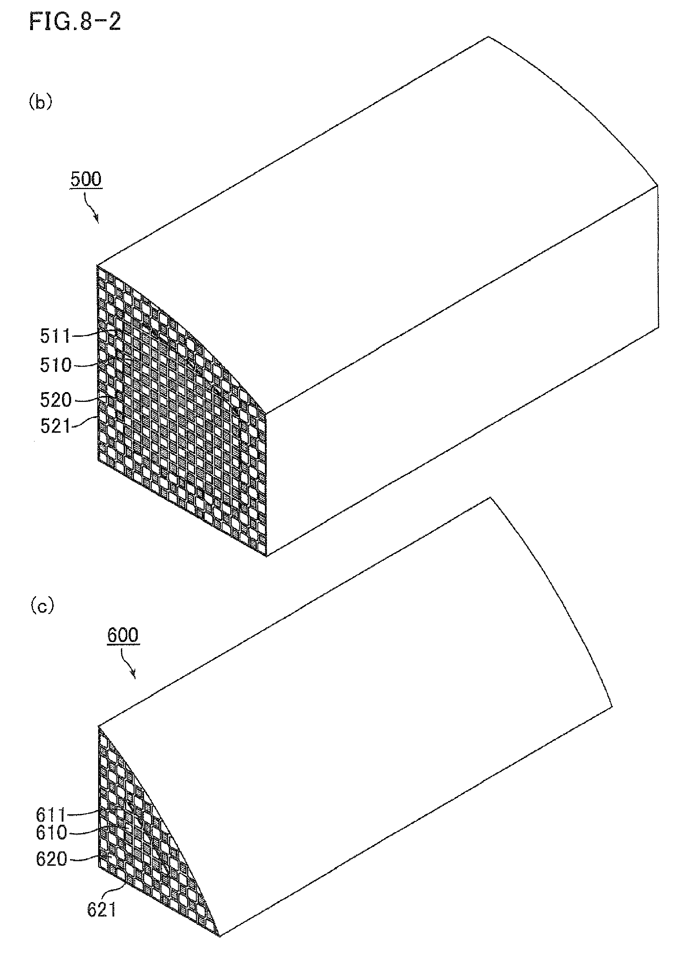

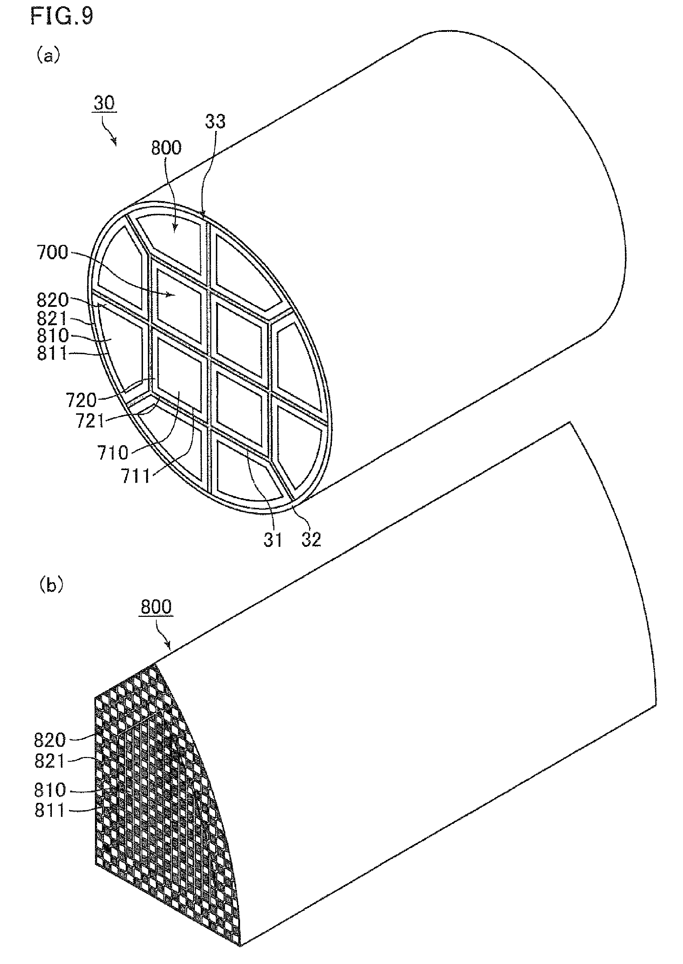

The honeycomb structured bodies illustrated in Figs. 8 and 9 also have different aperture ratios in the first cell region located at the central portion of the honeycomb fired body and in the second cell region surrounding the first cell region, and has a higher aperture ratio in the second cell region than in the first cell region. Therefore, due to the same mechanism, the honeycomb structured bodies each have a smaller temperature difference between the adhesive layers inside the honeycomb structured body and the portions near the centers of the honeycomb fired bodies (temperature gradient is not likely to occur). Hence, the temperatures inside the honeycomb structured body are equalized, and for this reason, cracks are not likely to occur in the honeycomb structured body.

The above idea is considered to be applied to various honeycomb structured bodies of the present invention having a higher aperture ratio in the second cell region than in the first cell region.

### (Second Embodiment)

Hereinafter, the second embodiment, which is one embodiment of the present invention, is described. The present embodiment is different from the first embodiment of the present invention in that a honeycomb block is manufactured by cutting an aggregate of honeycomb fired bodies in the first embodiment of the present invention whereas a honeycomb block is manufactured by combining honeycomb fired bodies which have shapes forming a substantially round pillar shape when combined together.

Fig. 8-1(a) is a perspective view schematically illustrating an example of a honeycomb structured body according to the second embodiment of the present invention. Fig. 8-2(b) is a perspective view schematically illustrating an example of a honeycomb fired body located on the periphery of the honeycomb structured body according to the second embodiment of the present invention. Fig. 8-2(c) is a perspective view schematically illustrating an example of another honeycomb fired body located on the periphery of the honeycomb structured body according to the second embodiment of the present invention.

A honeycomb structured body 20 illustrated in Fig. 8-1(a) has a honeycomb block 23 formed by bonding, by interposing adhesive layers 21, six honeycomb fired bodies 500 and six honeycomb fired bodies 600 which respectively have shapes illustrated in Fig. 8-2 (b) and 8-2 (c) , and four honeycomb fired bodies 400 having a shape that is the same as the honeycomb fired bodies constituting the honeycomb structured body according to the first embodiment of the present invention as illustrated in Fig. 3. The honeycomb block 23 has a coat layer 22 formed on the periphery thereof. The honeycomb fired bodies 500 and 600 are arranged in such a manner as to constitute the periphery of the honeycomb block 23. The honeycomb fired bodies 500 and 600 each are made of a porous silicon carbide sintered body. Since the honeycomb fired bodies 400 have the same structure as the honeycomb fired body having the shape illustrated in Fig. 3 according to the first embodiment of the present invention, descriptions thereof are omitted here.

As illustrated in Fig. 8-2(b), each honeycomb fired body 500 has a first cell region 510 surrounded by a first peripheral cell wall 511 and a second cell region 520 surrounding the entire first cell region 510. The second peripheral cell wall 521 defining the second cell region 520 is in contact with the adhesive layers 21 and with the coat layer 22.

As with the honeycomb fired bodies according to the first embodiment of the present invention, the first cells in the first cell region 510 each have a substantially quadrangular cell cross section, and the second cells in the second cell region 520 each have a substantially octagonal or substantially quadrangular cell cross section. Due to such a size relation between the cells, the second cell region 520 has a higher aperture ratio than the first cell region 510. Since the first peripheral cell wall 511 and the second peripheral cell wall 521 each also have a curved portion, the honeycomb fired body 500 also has cells which have a cell cross-sectional shape different from the substantial quadrangle and the substantial octagon. Even though such deformed cells exist as in the first embodiment of the present invention, the basic cell formation pattern is substantially quadrangular cell cross sections for the first cell region 510, and is substantially octagonal and substantially quadrangular cell cross sections for the second cell region 520. Accordingly, the first cells in the first cell region 410 are treated as cells each having a substantially quadrangular cell cross section and the second cells in the second cell region 520 are treated as cells each having a substantially octagonal or substantially quadrangular cell cross section.

In each honeycomb fired body 500, the first peripheral cell wall 511 has a similar shape to the second peripheral cell wall 521; in other words, the first cell region 510 has a similar shape to the end face of the honeycomb fired body 500.

The honeycomb fired body 600 illustrated in Fig. 8-2(c) has a first cell region 610 and a second cell region 620 surrounding the entire first cell region 610. Here, each of the first peripheral cell wall 611 and the second peripheral cell wall 621 has a curved portion as in the honeycomb fired bodies 500, and cells deformed by the curved portion exist. Still, the first formation pattern is substantially quadrangular cross sections and the second formation pattern is substantially octagonal and substantially quadrangular cross sections. The second cell region 620 has a higher aperture ratio than the first cell region 610.

In each honeycomb fired body 600, the first peripheral cell wall 611 has a similar shape to the second peripheral cell wall 621; in other words, the first cell region 610 has a similar shape to the end face of the honeycomb fired body 600.

The method of manufacturing the honeycomb structured body of the present embodiment is the same as that in the first embodiment of the present invention, except that the honeycomb molded bodies of the shapes illustrated in Fig. 3, Fig. 8-2 (b) , and Fig. 8-2(c) are manufactured by changing the shape of the dice used for extrusion molding. Bonding these honeycomb fired bodies together enables manufacture of a honeycomb block without the periphery cutting process. To the periphery of the honeycomb block, a coating material paste is applied to form a coating material paste layer, and then the coating material paste layer is dried into a coat layer. Thereby, the honeycomb structured body of the present embodiment is manufactured.

The effects (1) to (6) described in the first embodiment of the present invention can also be achieved in the present embodiment.

### (Third embodiment)

Hereinafter, a third embodiment, which is one embodiment of the present invention, is described. As with the second embodiment of the present invention, the present embodiment is different from the first embodiment of the present invention in that a honeycomb block is manufactured by combining honeycomb fired bodies which have shapes forming a substantially round pillar shape when combined together.

Fig. 9(a) is a perspective view schematically illustrating an example of a honeycomb structured body according to the third embodiment of the present invention. Fig. 9(b) is a perspective view schematically illustrating an example of a honeycomb fired body located on the periphery of the honeycomb structured body according to the third embodiment of the present invention.

A honeycomb structured body 30 illustrated in Fig. 9(a) has a honeycomb block 33 formed by bonding, by interposing adhesive layers 31, eight honeycomb fired bodies 800 each having a shape illustrated in Fig. 9(b), and four honeycomb fired bodies 700 having a shape that is the same as the honeycomb fired bodies constituting the honeycomb structured body according to the first embodiment of the present invention as illustrated in Fig. 3. The honeycomb block 33 has a coat layer 32 formed on the periphery thereof. The honeycomb fired bodies 800 are arranged in such a manner as to constitute the periphery of the honeycomb block 33. The honeycomb fired bodies 800 each are made of a porous silicon carbide sintered body.

As illustrated in Fig. 9(b), each honeycomb fired body 800 has a first cell region 810 surrounded by a first peripheral cell wall 811 and a second cell region 820 surrounding the entire first cell region 810. The second peripheral cell wall 821 defining the second cell region 820 is in contact with the adhesive layers 31 and with the coat layer 32.

As with the honeycomb fired bodies according to the first embodiment of the present invention, the first cells in the first cell region 810 each have a substantially quadrangular cell cross section, and the second cells in the second cell region 820 each have a substantially octagonal or substantially quadrangular cell cross section. Due to such a size relation between the cells, the second cell region 820 has a higher aperture ratio than the first cell region 810. Since the first peripheral cell wall 811 and the second peripheral cell wall 821 each also have a curved portion, the honeycomb fired body 800 also has cells which have a cell cross-sectional shape different from the substantial quadrangle and the substantial octagon. Even though such deformed cells exist as in the first embodiment of the present invention, the basic cell formation pattern is substantially quadrangular cell cross sections for the first cell region 810, and is substantially octagonal or substantially quadrangular cell cross sections for the second cell region 820. Accordingly, the cells in the first cell region 810 are treated as cells each having a substantially quadrangular cell cross section and the cells in the second cell region 820 are treated as cells each having a substantially octagonal or substantially quadrangular cell cross section.

In each honeycomb fired body 800, the first peripheral cell wall 811 has a similar shape to the second peripheral cell wall 821; in other words, the first cell region 810 has a similar shape to the end face of the honeycomb fired body 800.

The method of manufacturing the honeycomb structured body of the present embodiment is the same as that in the first embodiment of the present invention, except that the honeycomb molded bodies of the shapes illustrated in Fig. 3, and Fig. 9(b) are manufactured by changing the shape of the dice used for extrusion molding. Bonding these honeycomb fired bodies together enables manufacture of a honeycomb block without the periphery cutting process. To the periphery of the honeycomb block, a coating material paste is applied to form a coating material paste layer, and the coating material paste layer is dried and solidified into a coat layer. Thereby, the honeycomb structured body of the present embodiment is manufactured.

The effects (1) to (6) described in the first embodiment of the present invention can also be achieved in the present embodiment.

### (Fourth embodiment)

Hereinafter, a fourth embodiment, which is one embodiment of the present invention, is described. The present embodiment is different from the first embodiment of the present invention in that the cell wall forming the second cell region of the present invention has a waveform.

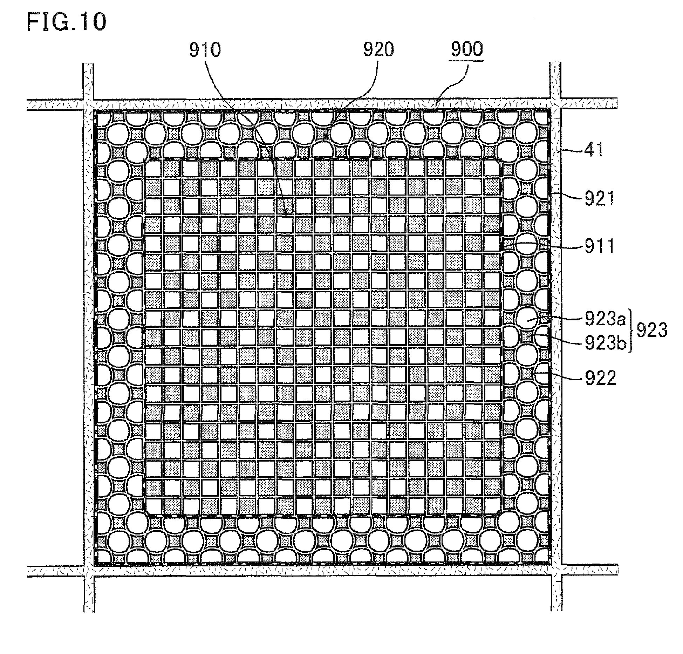

Fig. 10 is a front view schematically illustrating an example of a honeycomb fired body constituting the honeycomb structured body according to the fourth embodiment of the present invention. As illustrated in Fig. 10, each honeycomb fired body 900 has a first cell region 910 surrounded by a first peripheral cell wall 911 and a second cell region 920 surrounding the entire first cell region 910.

In the honeycomb fired body 900, the first cells in the first cell region 910 each have a substantially quadrangular cell cross section, and second large cells 923a and second small cells 923b in the second cell region 920 each have a cell cross section of a shape surrounded by a curved line (wave lines in the drawing) Second large cells 923a have a cell cross section of a convex shape that cell walls 922 curve from the center of the cell cross section toward the outside, while the second small cells 923b have a cell cross section of a convex shape that the cell walls 922 curve toward the center of the cell cross section.

The cell walls 922 extend in a waveform (in a sine curve shape) between two sets of opposite second peripheral cell walls 921. Here, at the positions where the peaks of the waveform (portion of the maximum value of the amplitude in the case of a sine curve) of the adjacent cell walls 922 are closest to each other, the second large cells 923a each having a cell cross-sectional shape bulging outward and the second small cells 923b each having a cell cross-sectional shape hollowed inward are formed. The amplitude may be constant or varied, and is preferably constant.

Due to such a size relation between the cells, the second cell region 920 has a higher aperture ratio than the first cell region 910 in the honeycomb fired body. The honeycomb fired body 900 also has cells which have a cell cross-sectional shape different from the first formation pattern and the second formation pattern. Even though such deformed cells exist as in the first embodiment of the present invention, the basic cell formation pattern is substantial quadrangles for the first cell region 910, and is shapes surrounded by a wave line for the second cell region 920. Accordingly, the first cells in the first cell region 910 are treated as cells each having a substantially quadrangular cell cross section and the second cells in the second cell region 820 are treated as cells each having a cell cross section of a shape surrounded by a wave line.

In each honeycomb fired body 900, the first peripheral cell wall 911 has a similar shape to the second peripheral cell wall 921; in other words, the first cell region 910 has a similar shape to the end face of the honeycomb fired body 900.

The method of manufacturing the honeycomb structured body of the present embodiment is the same as that in the first embodiment of the present invention, except that the honeycomb molded bodies of the shape illustrated in Fig. 10 are manufactured by changing the shape of the dice used for extrusion molding. Bonding these honeycomb fired bodies together and the periphery cutting process lead to manufacture of a honeycomb block. To the periphery of the honeycomb block, a coating material paste is applied to form a coating material paste layer, and then the coating material paste layer is dried and solidified into a coat layer. Thereby, the honeycomb structured body of the present embodiment is manufactured.

The following effect (7) as well as the effects (1) to (3), (5), and (6) described in the first embodiment of the present invention can be achieved in the present embodiment.

(7) When the first cells each have a substantially quadrangular shape in a cross section of the honeycomb fired body of the present embodiment, the honeycomb fired body can ensure the ease of manufacturing. Also, when the second large cells and the second small cells of the honeycomb fired body each have a cell cross section of a shape surrounded by a curved line, the symmetry of those cells is improved. This improvement leads to uniform inflow of exhaust gases to the second large cells of the honeycomb fired body, and also leads to improvement of the isostatic strength and the compressive strength of the honeycomb fired body.

### (Other embodiments)

The porosity of the honeycomb fired bodies constituting the honeycomb structured body of the present invention is not particularly limited, and is preferably 35 to 60%.
A porosity of the honeycomb fired body of less than 35% may cause clogging in the honeycomb fired body. In contrast, a porosity of the honeycomb fired body of more than 60% may decrease the strength of the honeycomb fired bodies, allowing the honeycomb fired bodies to be easily broken.

The average pore diameter of the honeycomb fired bodies is preferably 5 to 30 µm.
This is because an average pore diameter of the honeycomb fired body of less than 5 µm may easily cause particulate clogging whereas, in contrast, an average pore diameter of the honeycomb fired body of more than 30 µm may allow particulates to pass through the pores, which means that the particulates may not be captured. As a result, the honeycomb structured body may not be able to serve as a filter.

Here, the porosity and the pore diameter can be measured by conventionally known methods such as mercury porosimetry, Archimedes method, and a measuring method using a scanning electronic microscope (SEM). In the present invention, the values used are measured by the mercury porosimetry.

The thickness of each cell wall of each honeycomb fired body constituting the honeycomb structured body according to the present invention is not particularly limited, and is preferably 0.2 to 0.4 mm. This is because a thickness of the cell wall of the honeycomb fired body of less than 0.2 mm may decrease the thickness of the cell wall supporting the honeycomb fired body and thus lose the strength of the honeycomb structured body, whereas a thickness of the cell wall of the honeycomb fired body of more than 0.4 mm may easily increase the pressure loss of the honeycomb structured body.

The thickness of each outer wall (peripheral wall) of the honeycomb fired bodies constituting the honeycomb structured body of the present invention is not particularly limited, and is preferably 0.2 to 0.4 mm as is the case with the thickness of each cell wall of the honeycomb fired body.

The cell density of each first cell region in a cross section perpendicular to the longitudinal direction of each honeycomb fired body constituting the honeycomb structured body is not particularly limited, and is preferably 31. 0 pcs/cm² (200 pcs/(in²) ) at the minimum, is preferably 93.0 pcs/cm² (600 pcs/(in²)) at the maximum, is more preferably 38.8 pcs/cm² (250 pcs/ (in²) ) at the minimum, and is more preferably 77.5 pcs/cm² (500 pcs/(in²) ) at the maximum.

The cell density of each second cell region in a cross section perpendicular to the longitudinal direction of each honeycomb fired body constituting the honeycomb structured body is not particularly limited, and is preferably 24 . 8 pcs/cm² (160 pcs/(in²)) at the minimum, is preferably 93.0 pcs/cm² (600 pcs/ (in²) ) at the maximum, is more preferably 38. 8 pcs/cm² (250 pcs/ (in²) ) at the minimum, and is more preferably 77.5 pcs/cm² (500 pcs/(in²) ) at the maximum.

The main component of each honeycomb fired body constituting the honeycomb structured body is not limited to silicon carbide, and may be powders of the following ceramics: nitride ceramics such as aluminum nitride, silicon nitride, boron nitride, and titanium nitride; carbide ceramics such as zirconium carbide, titanium carbide, tantalum carbide, and tungsten carbide; oxide ceramics such as alumina, zirconia, cordierite, mullite, and aluminum titanate; and the like. Among these, non-oxide ceramics are preferable and silicon carbide is particularly preferable because they are excellent in heat resistance, mechanical strength, thermal conductivity, and the like. Moreover, ceramic materials such as silicon-containing ceramics having the above ceramic blended with metallic silicon, and ceramics bonded by silicon or silicate compounds can also be used as the constituent material. Among these, silicon carbide blended with metallic silicon (silicon-containing silicon carbide) is preferable. In particular, ceramics of silicon-containing silicon carbide containing about 60% by weight or more of silicon carbide are preferable.

The particle diameter of the ceramic powder is not particularly limited, and the silicon carbide powder that tends not to cause the case where the size of the honeycomb fired body manufactured by the following firing treatment becomes smaller than that of the honeycomb molded body after degreased is preferable. For example, ceramic powder is preferable which is prepared by combining 100 parts by weight of powder having a comparatively large average particle diameter of 1.0 to 50 µm with 5 to 65 parts by weight of powder having a comparatively small average particle diameter of 0.1 to 1.0 µm. In order to adjust the pore diameter and the like of the honeycomb fired body, it is necessary to adjust the firing temperature. However, it is also possible to adjust the pore diameter by adjusting the particle diameter of the ceramic powder.

The organic binder in the wet mixture is not particularly limited, and examples of compounds used as the organic binder include methylcellulose, carboxy methylcellulose, hydroxy ethylcellulose, and polyethylene glycol. Methylcellulose is preferable among these. The blending amount of the organic binder is preferably 1 to 10 parts by weight per 100 parts by weight of ceramic powder.

The plasticizer in the wet mixture is not particularly limited, and examples of compounds used as the plasticizer include glycerin and the like. The lubricant is not particularly limited, and examples of compounds used as the lubricant include polyoxyalkylene-based compounds such as polyoxyethylene alkyl ether and polyoxypropylene alkyl ether; polyoxyethylene monobutyl ether; polyoxypropylene monobutyl ether; and the like.
The plasticizer and the lubricant may not be contained in the wet mixture in some cases.

In addition, a dispersant solution may be used in preparation of a wet mixture, and examples of the dispersant solution include water, an organic solvent such as benzene, alcohol such as methanol, and the like. Furthermore, a molding aid may be added to the wet mixture. The molding aid is not particularly limited, and examples of compounds used as the molding aid include ethylene glycol, dextrin, fatty acid, fatty acid soap, polyalcohol, and the like.

Furthermore, a pore-forming agent such as balloons that are fine hollow spheres including oxide-based ceramics, spherical acrylic particles, and graphite may be added to the wet mixture according to need. The balloon is not particularly limited, and examples thereof include alumina balloon, glass micro balloon, shirasu balloon, fly ash balloon (FA balloon) , mullite balloon, and the like. Alumina balloon is preferable among these.

Examples of the inorganic binder in the adhesive paste and the coating material paste include silica sol, alumina sol, and the like binders. Each of these binders may be used alone, or two or more kinds of these may be used in combination. Silica sol binder is preferable among the inorganic binders.

Examples of the organic binder in the adhesive paste and the coating material paste include polyvinyl alcohol, methyl cellulose, ethyl cellulose, carboxymethyl cellulose, and the like binders. Each of these may be used alone or two or more kinds of these may be used in combination. Carboxymethyl cellulose binder is preferable among the organic binders.

Examples of the inorganic fibers in the adhesive paste and the coating material paste include ceramic fibers such as silica-alumina, mullite, alumina, and silica fibers. Each of these may be used alone or two or more kinds of these may be used in combination. Alumina fibers are preferable among the inorganic fibers.

Examples of the inorganic particles in the adhesive paste and the coating material paste include carbide, nitride, and the like particles. Specific examples thereof include inorganic powders made from silicon carbide, silicon nitride, boron nitride, and the like. Each of these may be used alone, or two or more kinds of these may be used in combination. Among the inorganic particles, silicon carbide particles are preferable because they have excellent thermal conductivity.

Moreover, a pore-forming agent such as balloons that are fine hollow spheres including oxide-based ceramics, spherical acrylic particles, and graphite may be added to the adhesive paste and the coating material paste according to need. The balloons are not particularly limited, and examples thereof include alumina balloons, glass micro-balloons, shirasu balloons, fly ash balloons (FA balloons), mullite balloons, and the like. Alumina balloons are preferable among these.

A catalyst may be supported on the honeycomb structured body of the present invention.
Since a catalyst capable of converting toxic gas components in exhaust gases, such as CO, HC, and NO, is supported in the honeycomb structured body of the present invention, the toxic gas components in the exhaust gases can be sufficiently converted by catalytic reaction. Further, supporting a catalyst which assists burning of PMs makes it possible to burn and remove PMs more easily.

### EXPLANATION OF SYMBOLS

- 10, 20, 30: Honeycomb structured body
- 11, 21, 31, 41, 51: Adhesive layer
- 13, 23, 33: Honeycomb block
- 100, 200, 300, 400, 500, 600, 700, 800, 900: Honeycomb fired body
- 110, 210, 310, 410, 510, 610, 710, 810, 910: First cell region
- 111, 211, 311, 411, 511, 611, 711, 811, 911: First peripheral cell wall
- 113, 213, 313: First cell
- 120, 220, 320, 420, 520, 620, 720, 820, 920: Second cell region
- 121, 221, 321, 421, 521, 621, 721, 821, 921: Second peripheral cell wall
- 123, 223, 323, 923: Second cell
- 123a, 223a, 323a, 923a: Second large cell
- 123b, 223b, 323b, 923b: Second small cell
- 130: Inside defining line
- 131, 331: (Inner) path
- 132, 332: (Outer) path
- A: Given point
- G: Center of end face of honeycomb fired body

## Claims

1. A honeycomb structured body comprising a honeycomb block formed by bonding a plurality of honeycomb fired bodies together with an adhesive layer interposed between the plurality of honeycomb fired bodies, each of the honeycomb fired bodies having a large number of cells that are longitudinally arranged in parallel with each other with a cell wall therebetween,
wherein
at least one of the honeycomb fired bodies has a first cell region having a plurality of first cells formed therein and a second cell region having a plurality of second cells formed therein and existing, in such a manner as to surround a part or the whole of the first cell region, between a first peripheral cell wall located on the periphery of the first cell region and a second peripheral cell wall located on the periphery of each honeycomb fired body,
at least a part of the second peripheral cell wall defining the second cell region is in contact with the adhesive layer,
the first cells and second cells are plugged at alternate ends,
the honeycomb structured body has a higher aperture ratio at a first end face than at a second end face, and
the first end face has a higher aperture ratio in the second cell region than in the first cell region.

2. The honeycomb structured body according to claim 1,
wherein
in a cross section perpendicular to the longitudinal direction, the second cells include second large cells each having a larger cell cross-sectional area than each of the first cells and second small cells each having a smaller cell cross-sectional area than each of the second large cells.

3. The honeycomb structured body according to claim 2,
wherein
in the cross section perpendicular to the longitudinal direction, each of the second small cells has a smaller cell cross-sectional area than each of the first cells.

4. The honeycomb structured body according to claim 2 or 3,
wherein
in the cross section perpendicular to the longitudinal direction, each of the first cells has a substantially quadrangular cell cross section, each of the second large cells has a substantially octagonal cell cross section, and each of the second small cells has a substantially quadrangular cell cross section.

5. The honeycomb structured body according to claim 2 or 3,
wherein
in the cross section perpendicular to the longitudinal direction, each of the first cells has a substantially quadrangular cell cross section, and each of the second large cells and each of the second small cells have a cell cross section of a shape surrounded by a curved line.

6. The honeycomb structured body according to claim 2 or 3,
wherein
in the cross section perpendicular to the longitudinal direction, each of the first cells, each of the second large cells, and each of the second small cells have a substantially quadrangular cell cross section.

7. The honeycomb structured body according to any one of claims 1 to 6,
wherein
in the cross section perpendicular to the longitudinal direction, the first cells include first large cells and first small cells, and each of the first large cells has a larger cell cross-sectional area than each of the first small cells.

8. The honeycomb structured body according to any one of claims 1 to 7,
wherein
at the first end face, the first peripheral cell walls each have a similar shape to the second peripheral cell walls.

9. The honeycomb structured body according to any one of claims 1 to 8,
wherein
at the first end face, each first peripheral cell wall is formed in a region which is defined assuming that:
a given point is on an inside defining line defining the inside of the second peripheral cell wall in contact with the adhesive layer, and moves along the inside defining line;
two points are on a line segment at respective distances from the given point, the line segment connecting the given point and the center of the end face of the honeycomb fired body, the respective distances being 1/6 of the length of the line segment and 1/2 of the length of the line segment; and
the two points draw paths corresponding to the movement of the given point so as to define the region.

10. The honeycomb structured body according to claim 9,
wherein
at the first end face, each first peripheral cell wall is formed in a region which is defined assuming that:
a given point is on an inside defining line defining the inside of the second peripheral cell wall in contact with the adhesive layer, and moves along the inside defining line;
two points are on a line segment at respective distances from the given point, the line segment connecting the given point and the center of the end face of the honeycomb fired body, the respective distances being 1/4 of the length of the line segment and 1/3 of the length of the line segment; and
the two points draw paths corresponding to the movement of the given point so as to define the region.

11. The honeycomb structured body according to any one of claims 1 to 10,
wherein
the honeycomb block has a peripheral coat layer formed on the periphery thereof, and
at least a part of the second peripheral cell wall defining the second cell region is in contact with the peripheral coat layer.
